# FASCICULE DE BREVET EUROPEEN

(11) **EP 3 067 618 B1**
(45) Date de publication et mention de la délivrance du brevet: **16.05.2018**
(21) Numéro de dépôt: 16158748.0
(22) Date de dépôt: 04.03.2016
(51) Int. Cl.: G02B 6/00, F21V 8/00

(54) **DISPOSITIF LUMINEUX A GUIDES OPTIQUES**
LEUCHTVORRICHTUNG MIT OPTISCHEN WELLENLEITERN
LIGHT-EMITTING DEVICE WITH OPTICAL WAVEGUIDES

(30) Priorité: 13.03.2015 FR 1552071
(43) Date de publication de la demande: 14.09.2016
(73) Titulaire: VALEO ILUMINACION, 23600 Martos (ES)
(72) Inventeur: CHOTARD, Alexandre, 23600 MARTOS (ES); MOLINA, Irene, 14880 Luque Cordoba (ES); ORTEGA, Antonio, MARTOS Jaen (ES); JACQUEMIN, Paul, Seymour 47274 Indiana (US)

(56) Documents cités:
- EP-A1- 1 903 274
- EP-A1- 2 743 567
- EP-A2- 1 726 479
- DE-A1-102011 050 062
- GB-A- 607 923
- US-A1- 2010 246 200
- US-A1- 2011 216 549

## Description

L'invention a trait au domaine de l'éclairage et/ou de la signalisation, notamment pour véhicules automobiles. Elle concerne plus particulièrement un dispositif lumineux à guides optiques apte à être implanté dans un module lumineux de projecteur.

Un véhicule automobile est équipé de projecteurs, ou phares, destinés à illuminer la route devant le véhicule, la nuit ou en cas de luminosité réduite, par un faisceau lumineux global. Ces projecteurs, un projecteur gauche et un projecteur droit, comportent un ou plusieurs modules lumineux adaptés à générer et diriger un faisceau lumineux intermédiaire dont l'addition forme ledit faisceau lumineux global.

Ces projecteurs peuvent généralement être utilisés selon deux modes d'éclairage : un premier mode " feux de route " et un deuxième mode " feux de croisement ". Le mode " feux de route " permet d'éclairer fortement la route loin devant le véhicule. Le mode " feux de croisement " procure un éclairage plus limité de la route, mais offrant néanmoins une bonne visibilité, sans éblouir les autres usagers de la route. Les deux modes d'éclairage, " feux de route " et " feux de croisement ", sont complémentaires, et l'on passe de l'un à l'autre en fonction des conditions de circulation. La commutation d'un mode à l'autre peut se faire manuellement, le conducteur décidant du moment de cette commutation, ou elle peut se faire automatiquement, en fonction de la détection par des moyens appropriés de conditions requises à un tel changement de mode d'éclairage.

Il existe désormais un besoin, dans le domaine de l'automobile, de pouvoir illuminer la route devant soi en "mode éclairage route partiel", à savoir générer dans un faisceau route une ou plusieurs plages sombres correspondant aux endroits où sont présents des véhicules venant en sens inverse ou des véhicules roulant devant, de manière à éviter l'éblouissement des autres conducteurs tout en éclairant la route dans sa plus grande surface. Une telle fonction est appelée ADB (Adaptive Driving Beam en anglais) ou encore " faisceau sélectif ". Une telle fonction ADB consiste à d'une part détecter de façon automatique un usager de la route susceptible d'être ébloui par un faisceau d'éclairage émis en mode feux de route par un projecteur, et à d'autre part modifier le contour de ce faisceau d'éclairage de manière à créer une zone d'ombre à l'endroit où se trouve l'usager détecté. Les avantages de la fonction ADB sont multiples : confort d'utilisation, meilleure visibilité par rapport à un éclairage en mode feux de croisement, meilleure fiabilité pour le changement de mode, risque d'éblouissement fortement réduit, conduite plus sûre.

On connaît des modules lumineux pour la réalisation de faisceau sélectif dans lesquels des guides optiques sont disposés côte à côte, chacun étant illuminé par une source de lumière respective de sorte que le faisceau lumineux en sortie du module est découpé en segments contigus que l'on peut éteindre ou allumer en fonction d'instructions de détection d'un véhicule à proximité. Des modules lumineux comportant une série de guides optiques et formés de sous-ensembles sont connus du document DE102011050062. La forme et la disposition des guides les uns par rapport aux autres dans un module d'un projecteur doivent être très précises pour d'une part pouvoir réaliser un faisceau intermédiaire en sortie de module qui soit homogène et lissée lorsque tous les segments sont allumés, et pour d'autre part pouvoir présenter un faisceau intermédiaire complémentaire du faisceau intermédiaire réalisé en sortie de l'autre projecteur.

L'invention a pour objectif de proposer un dispositif lumineux qui permet la mise en oeuvre simple et efficace d'une fonction d'éclairage matriciel et dont les fonctions d'éclairage et/ou de signalisation sont au moins aussi performantes que précédemment, et ce à moindre coût. Dans ce but, l'invention a pour objet un dispositif lumineux comportant une série, par exemple transversale, de guides optiques, chaque guide étant apte à permettre le guidage de rayons lumineux entre une face d'entrée et une face de sortie. L'invention est définie par l'objet de la revendication indépendante 1. Selon une caractéristique particulière de l'invention, les guides optiques sont disposés de sorte que l'extrémité distale respective, porteuse de la face de sortie, de deux guides voisins sont au contact l'une de l'autre et de sorte que l'extrémité proximale respective, porteuse de la face d'entrée, de ces deux guides voisins sont écartés transversalement l'une de l'autre. On comprend que d'une part les extrémités proximales des guides doivent être espacées pour que la lumière émise par une source de lumière vers un guide optique ne pénètre pas dans le guide voisin, et que d'autre part les extrémités distales des guides doivent être collées successivement les unes aux autres pour éviter les zones sombres entre les segments de lumière formés par les guides et projetés vers le dispositif de projection en sortie du module.

Dans cette forme en éventail, les extrémités distales des guides optiques voisins peuvent être plaquées l'une contre l'autre sur une portion de recouvrement déterminée, qui peut notamment prendre une valeur sensiblement égale à 1mm. Et l'écartement transversal des extrémités proximales des deux guides optiques voisins peut être inférieur ou égal à 5 mm.

On prévoit que les guides optiques soient répartis transversalement de part et d'autre d'un guide central. Et il est intéressant dans ce cas que l'extrémité distale des guides optiques disposés d'un côté du guide central présente une hauteur moindre que celle de l'extrémité distale des guides disposés de l'autre côté du guide central. Le guide central présente dans ce cas une face de sortie agencée pour présenter un bord latéral dont la hauteur correspond à celle de l'extrémité distale des guides disposés d'un côté du guide central, un autre bord latéral dont la hauteur correspond à celle de l'extrémité distale des guides disposés de l'autre côté du guide central et un bord supérieur reliant les deux bords latéraux et présentant un ressaut, par exemple vertical ou oblique. Ainsi, on peut s'adapter à la forme d'un cache disposé dans le module lumineux où est implanté le dispositif pour former un bord de coupure d'un faisceau de type " feux de croisement ".

Selon des caractéristiques d'un mode de réalisation particulier de l'invention, prises seules ou en combinaison, le dispositif est formé de deux sous-ensembles portant chacun des guides optiques de ladite série et au moins un élément structurel. Et le premier sous-ensemble et le deuxième sous-ensemble comportent un nombre différent de guides optiques.

On peut prévoir que le dispositif comporte cinq guides optiques parmi lesquels un guide central, deux guides intermédiaires disposés directement au voisinage du guide central de part et d'autre de celui-ci, et deux guides latéraux disposés aux extrémités de la série, et dans ce contexte on peut prévoir que le premier sous-ensemble comporte le guide central et les guides latéraux tandis que le deuxième sous-ensemble comporte les guides intermédiaires. On comprend que l'on pourrait alors avoir un nombre différent de guides, sept ou neuf guides par exemple, dont la largeur pourrait être adaptée et diminuée. On note que le nombre de guides optiques du dispositif est avantageusement impair pour conserver cette disposition dans laquelle un guide central est porté par le premier sous-ensemble, des guides intermédiaires sont agencés par paire de part et d'autre du guide central, et deux guides latéraux sont portés par un même sous-ensemble, à savoir le premier ou le deuxième selon le nombre de guides intermédiaires. On pourrait également prévoir que le dispositif ne comporte pas de guide optique intermédiaire, le nombre de guides optiques étant alors égal à trois, avec le guide central porté par le premier sous-ensemble et le les guides latéraux portés par le deuxième sous-ensemble.

Selon des caractéristiques propres à la constitution des éléments structurels, on pourra prévoir que :
- l'élément structurel du deuxième sous-ensemble présente la forme d'une bande d'appui positionné contre l'extrémité proximale des guides optiques, ladite bande comportant des encoches pour positionner les guides optiques portés par le premier sous-ensemble par rapport aux guides optiques solidaires de ladite bande ; on pourra remplacer les encoches par des ouvertures dans l'épaisseur de la bande, le rôle de positionnement des guides restant le même ; on prévoit en outre, au niveau de ces encoches ou de ces ouvertures, que la bande d'appui s'élargisse longitudinalement pour former un bord d'appui contre les guides, cette bande d'appui comportant à ses extrémités transversales des pattes de fixation à la structure du module lumineux ;
- le premier sous-ensemble comporte un premier élément structurel apte à relier les extrémités proximales des guides optiques et il peut comporter en outre un deuxième élément structurel distinct apte à relier les extrémités distales des guides optiques et ne gênant pas la propagation des rayons lumineux en direction du dispositif de projection en sortie du module ;
- le premier élément structurel comporte des arches reliant un à un les guides optiques du premier sous-ensemble et aptes à venir en recouvrement de l'extrémité proximale des guides optiques portés par le deuxième sous-ensemble ;
- le deuxième élément structurel consiste en une bande disposée transversalement aux faces de sortie, en aval desdites faces de sortie sur le trajet des rayons lumineux, en matière translucide ou transparente, contre laquelle les faces de sortie des guides du deuxième sous-ensemble viennent en appui ; on pourra prévoir que les faces de sortie des guide du deuxième sous-ensemble soient collées à la bande ; par ailleurs, on pourra prévoir que la bande est venue de matière avec les guides du premier sous-ensemble ou bien qu'elle est obtenue par surmoulage par exemple ;
- l'élément structurel d'au moins un sous-ensemble porte des moyens aptes à coopérer avec une platine de support pour la fixation du dispositif dans un module lumineux ; cette platine peut comporter deux montants transversaux et deux pattes de fixation latérales aptes à être rapportées sur la structure du module pour assurer la mise en place du dispositif à l'emplacement souhaité dans le module, tandis que les montants transversaux permettent le support de chacune des extrémités, proximales et distales, des guides optiques ;

Selon d'autres caractéristiques de l'invention, prises seules ou en combinaison, chaque guide optique comporte en outre une face inférieure et une face supérieure qui s'étendent entre les extrémités de la face d'entrée et de la face de sortie, la face inférieure étant une face de réflexion. Cette face inférieure peut présenter une forme sensiblement elliptique dont un premier foyer coïncide avec l'emplacement d'une source émettrice de rayons lumineux disposée au niveau de la face d'entrée du guide et dont un deuxième foyer est situé au niveau de la face de sortie. Le deuxième foyer de la face inférieure peut être situé au niveau de l'arête jointive de la face supérieure et de la face de sortie.

On prévoit de réaliser les sous-ensembles ou tout au moins les guides optiques des sous-ensembles, voire les sous-ensembles, en un matériau permettant la propagation des rayons lumineux par réflexion interne depuis la face d'entrée vers la face de sortie, par exemple du polycarbonate (PC) ou du polyméthacrylate de méthyle (PMMA) ou du silicone ou du verre.

L'invention concerne également un module lumineux pour un dispositif d'éclairage et/ou de signalisation de véhicule automobile dans lequel on prévoit au moins des premiers moyens comportant un dispositif lumineux tel qu'il vient d'être décrit précédemment, pour participer à la réalisation d'une pluralité de segments lumineux activables sélectivement.

Dans une application particulière du dispositif lumineux de l'invention, le module lumineux peut comporter des deuxièmes moyens, agencés pour réaliser un premier faisceau à coupure dirigé vers un dispositif de projection agencé en sortie du module, les segments lumineux réalisés par les premiers moyens formant un deuxième faisceau dirigé vers le dispositif de projection et complémentaire au faisceau à coupure, lorsqu'ils sont activés simultanément.

Notamment, les deuxièmes moyens peuvent consister en un premier sous-module agencé pour réaliser un faisceau de type code, notamment présentant une portion de coupure oblique. Et le dispositif de projection peut être une lentille mais pourra prendre d'autres formes connues par ailleurs.

Il est notable que les deuxièmes moyens comportent au moins un réflecteur, une source lumineuse disposée au niveau d'un foyer du réflecteur et un cache, disposé sur le trajet des rayons lumineux issus de la source lumineuse et réfléchis par le réflecteur, pour la réalisation du faisceau à coupure, et il est notable que les guides optiques du dispositif lumineux sont disposés de façon à être en contact avec le cache. Les guides optiques peuvent être orientés de façon à être en contact avec le cache uniquement au voisinage de la zone focale du dispositif de projection.

Selon une caractéristique de l'invention, les premiers moyens comportent une pluralité de sources lumineuses, chaque source lumineuse étant associée à un guide optique d'un groupe de guides optiques du dispositif lumineux, et le nombre de guides optiques dudit groupe de guides est inférieur ou égal au nombre de guides optiques du dispositif lumineux. On pourra prévoir dans une réalisation préférée que le nombre de guides optiques dudit groupe de guides soit strictement inférieur au nombre de guides optiques du dispositif lumineux.

Avantageusement, chaque source lumineuse est disposée au niveau de la face d'entrée du guide optique associé, par exemple au premier foyer de la face de réflexion. Avantageusement encore, le groupe de guides comprend uniquement les guides optiques situés d'un côté du guide central ainsi que le guide central.

L'invention concerne également un système d'éclairage pour un véhicule automobile comprenant au moins un module lumineux tel que décrit précédemment et des moyens de commande pour allumer, éteindre ou modifier la puissance lumineuse émise par les premiers moyens et les deuxièmes moyens du module lumineux.

On pourra également prévoir un module de détection sur la route d'un corps à ne pas éblouir. Ce module de détection peut consister par exemple en une caméra tournée vers la scène de route s'étendant devant le véhicule, et en des moyens de traitement d'image associés, qui permettent l'élaboration d'un information de détection que le module de détection est apte à envoyer aux moyens de commande pour l'allumage, l'extinction ou la modification de la puissance lumineuse émise par chaque source de lumière en fonction de cette information de détection.

Il est avantageux de prévoir un système d'éclairage dans lequel au moins un module selon l'invention est disposé dans un projecteur gauche, et au moins un autre module selon l'invention est disposé dans un projecteur droit. Le module disposé dans le projecteur gauche comporte un dispositif lumineux avec un premier sous-ensemble de guides optiques d'un premier type, et un deuxième sous-ensemble de guides optiques d'un deuxième type, tandis que le module disposé dans le projecteur droit comporte un deuxième dispositif lumineux avec un premier sous-ensemble de guides optiques d'un troisième type et un deuxième sous-ensemble de guides optiques d'un deuxième type, semblable au deuxième sous-ensemble du premier dispositif lumineux.

Les modules peuvent être agencés les uns par rapport aux autres que ce soit au sein d'un même projecteur, ou entre les deux projecteurs, de manière à ce qu'au moins une partie de faisceau, par exemple un segment, réalisée par l'un des modules recouvre au moins une partie de faisceau, dans l'exemple un segment, réalisée par un autre des modules.

D'autres caractéristiques et avantages de la présente invention apparaitront plus clairement à l'aide de la description et des dessins parmi lesquels :
- la figure 1 est une vue en perspective d'un dispositif lumineux selon l'invention ;
- les figures 2 et 3 sont des vues en perspective des deux sous-ensembles formant le dispositif de la figure 1 ;
- la figure 4 est une vue d'ensemble d'un module lumineux pour un projecteur de véhicule automobile, dans lequel on a utilisé le dispositif lumineux de la figure 1 ;
- la figure 5 est une vue en perspective éclatée des sous-ensembles du dispositif et du moyen de support pour sa fixation dans le module lumineux de la figure 4 ;
- et la figure 6 est une illustration d'un mode de mise en oeuvre préférée de l'invention, dans laquelle on prévoit une standardisation du dispositif sur des modules lumineux gauche et droit, qui diffèrent par l'emplacement des sources lumineuses associées aux dispositifs.

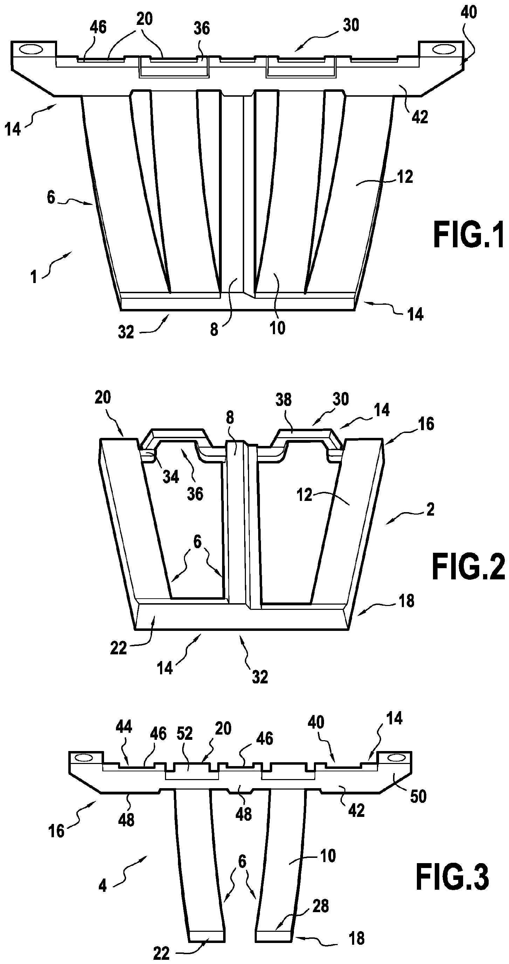

On va tout d'abord décrire le dispositif lumineux selon l'invention, en s'appuyant notamment sur les figures 1 à 3, sur lesquelles il apparaît que le dispositif 1 est formé de deux sous-ensembles distincts 2 et 4 que l'on vient assembler l'un avec l'autre.

Le dispositif assemblé, visible sur la figure 1, comporte ici cinq guides optiques 6 parmi lesquels on distinguera un guide central 8, deux guides intermédiaires 10 et deux guides latéraux 12 agencés transversalement en série de sorte que l'on retrouve successivement un guide latéral, un guide intermédiaire, le guide central, un guide intermédiaire et un guide latéral. Le dispositif comporte également des éléments structurels 14 de tenue des guides en position, qui d'une part relient entre elles les extrémités proximales 16 correspondantes des guides, et d'autre part qui relient entre elles les extrémités distales 18 correspondantes des guides.

Chaque guide optique 6 est adapté à guider par réflexion interne des rayons lumineux émis par une source de lumière associée au guide pour les diriger en sortie du guide vers un dispositif de projection de type lentille. A cet effet, chaque guide présente une face d'entrée 20 de la lumière agencée à l'extrémité proximale 16 du guide et une face de sortie 22 de la lumière agencée à l'extrémité distale 18, ainsi qu'une face inférieure 24, dite de réflexion, et une face supérieure 26, dite avant, qui s'étendent entre les extrémités de la face d'entrée et de la face de sortie.

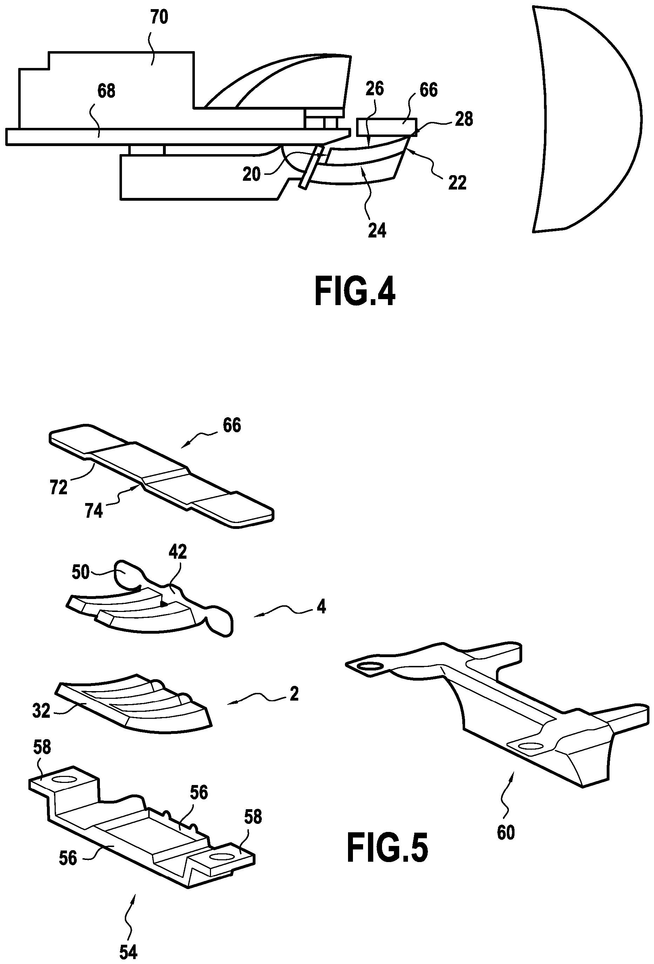

On définit à titre arbitraire la hauteur d'un guide optique comme la dimension entre la face de réflexion 24 et la face avant 26 (visibles sur la figure 4), selon une direction verticale, tandis que la longueur du guide est définie comme la dimension entre la face d'entrée et la face de sortie selon une direction longitudinale, et que la largeur du guide correspond à la dimension dans la direction transversale dans laquelle les guides sont en série.

Dans l'exemple illustré, et tel que cela est notamment visible sur la figure 4, la face de réflexion 24 présente une forme sensiblement elliptique dont un premier foyer coïncide avec l'emplacement de la source de lumière et dont un deuxième foyer, dit de focalisation, est situé au niveau de l'arête jointive 28 de la face avant 26 et de la face de sortie 22, de sorte que les rayons lumineux réfléchis dans chaque guide optique sortent du guide principalement au sommet de la face de sortie 22.

Le dispositif lumineux présente un agencement sensiblement symétrique de part et d'autre du guide central, à l'exception faite de la hauteur de chaque partie symétrique. La hauteur des guides optiques est différente selon que les guides sont disposés d'un côté ou de l'autre du guide central, et le guide central présente une face de sortie dont l'arête jointive 28 avec la face avant est rognée pour présenter un ressaut, vertical ou oblique, de manière à former sensiblement une marche d'escalier. Tel qu'illustré sur les figures, les guides disposés à droite du guide central, lorsque l'on regarde le dispositif en face des faces de sortie des guides, présentent une hauteur moindre de celle des guides disposés à gauche du guide central. En d'autres termes, le guide central présente une face de sortie agencée pour présenter un bord latéral, dont la hauteur correspond à celle de l'extrémité distale des guides disposés d'un côté du guide central, un autre bord latéral, dont la hauteur correspond cette fois à celle de l'extrémité distale des guides disposés de l'autre côté du guide central, et un bord supérieur reliant les deux bords latéraux et présentant ledit ressaut.

Les guides optiques 6 sont disposés, et maintenus en position par les éléments structurels 14, de manière à se trouver en série transversale, dans un agencement en éventail. On entend par agencement en éventail des guides du dispositif un agencement dans lequel les extrémités distales 18 respectives des guides optiques, porteuses des faces de sortie de la lumière, sont collées les unes contre les autres et dans lequel les extrémités proximales 16 respectives, porteuses des faces d'entrée de la lumière en regard des sources de lumières, sont espacées transversalement l'une de l'autre. Les extrémités proximales doivent être espacées pour que la lumière émise par une source de lumière vers un guide optique ne pénètre pas dans le guide voisin, et les extrémités distales des guides doivent être collées successivement les unes aux autres pour éviter les zones sombres entre les segments de lumière formés par les guides et projetés vers le dispositif de projection en sortie du module. Tel que cela est illustré, il est avantageux que les extrémités distales des guides optiques soient plaquées l'une contre l'autre sur une distance déterminée, qui peut être d'environ 1mm à titre d'exemple, pour former une portion de recouvrement des segments lumineux et s'assurer un éclairage continu lorsque tous les segments sont allumés.

Des éléments structurels permettent la tenue des guides optiques entre eux et certains coopèrent entre eux à proximité de l'extrémité proximale des guides tandis que des deuxièmes éléments structurels présentent la forme de plaques contre lesquelles les faces de sortie des guides viennent en appui longitudinal. On constate que ces deuxièmes éléments structurels participent au recouvrement des extrémités distales de chaque guide.

Selon l'invention, ce dispositif est donc formé de deux sous-ensembles distincts que l'on vient assembler l'un contre l'autre.

Le premier sous-ensemble 2, illustré sur la figure 2, comporte ici trois guides optiques disposés en série transversale et espacés les uns des autres, ainsi que des éléments structurels raccordant les extrémités correspondantes de ces guides. Le premier sous-ensemble porte ici le guide central 8 et les guides latéraux 12, espacés du guide central à leur extrémité distale 18 d'une distance sensiblement égale à la largeur du guide intermédiaire 10 amené à venir se placer entre eux par assemblage des deux sous-ensembles.

Le premier sous-ensemble comporte des premiers éléments structurels 30 disposés entre les extrémités proximales 16 des guides optiques et des deuxièmes éléments structurels 32 disposés entre les extrémités distales des guides. Tel que cela est particulièrement visible sur la figure 1, les premiers éléments structurels comportent des doigts 34 prolongeant transversalement les extrémités proximales des guides, dans le sens du rapprochement du guide voisin, et des arches 36 qui s'étendent entre deux doigts en regard en formant un dégagement sensiblement dans le sens de la hauteur, c'est à dire dans la direction perpendiculaire à la direction transversale de la série des guides et à la direction longitudinale principale des guides. Les arches sont sensiblement inclinées vers les guides optiques et leur extrémité distale pour que la partie supérieure 37 de l'arche se referme au moins en partie au-dessus des doigts.

Les deuxièmes éléments structurels présentent la forme de deux plaques 38 disposées de part et d'autre du guide central 8 en prolongeant transversalement l'extrémité distale du guide central pour venir en recouvrement des faces de sortie des guides optiques latéraux 12. Les plaques s'étendent parallèlement aux plans définis par les faces de sortie des guides et elles ne gênent pas la propagation des rayons lumineux en direction de la lentille en sortie du module.

Le deuxième sous-ensemble 4, visible sur la figure 3, comporte ici deux guides optiques disposés en série transversale et espacés l'un de l'autre, ainsi qu'un élément structurel raccordant l'une des extrémités de chacun des guides. Le deuxième sous-ensemble porte ici les guides intermédiaires 10 espacés l'un de l'autre à leur extrémité distale 18 d'une distance sensiblement égale à la largeur du guide central 8 amené à venir se placer entre eux par assemblage des deux sous-ensembles.

Le deuxième sous-ensemble comporte des troisièmes éléments structurels 40 disposés au niveau des extrémités proximales des guides optiques, et qui comporte une bande d'appui transversale 42 disposée contre la face avant des guides. Cette bande d'appui présente une face avant et une face arrière 44, en regard de la face avant des guides optiques. La face arrière présente trois encoches 46 qui s'étendent sur toute la hauteur de la bande, sur une largeur sensiblement égale et légèrement supérieure à la largeur des guides latéraux et du guide central portés par le premier sous-ensemble. Tel que cela sera décrit ci-après, les encoches correspondent à des logements des guides rapportés contre la bande d'appui par assemblage du premier sous-module. Au niveau de ces encoches, la bande d'appui est élargie longitudinalement pour former un bord d'appui 48 contre les guides. La bande d'appui comporte à ses extrémités transversales des pattes de fixation 50.

Au niveau des guides intermédiaires venus de matière avec la bande d'appui, cette dernière présente un dégagement 52 formant une surface d'accueil de l'arche lorsque les deux sous-ensembles sont assemblés, la face d'entrée du guide intermédiaire venant se loger dans une arche du premier sous-ensemble.

Chacun des sous-ensembles est réalisé individuellement par moulage et ils sont ensuite montés les uns par rapport aux autres, par coopération des éléments structurels. Les guides sont ici pré-maintenus les uns par rapport aux autres, avec leur extrémités distales au contact de l'extrémité distale du guide voisin, et l'espacement des guides l'un par rapport à son ou ses voisins au niveau de leur extrémités proximales, correspondant à leur face d'entrée des rayons lumineux, est assuré par le logement de l'extrémité proximale des guides du premier sous-ensemble dans les encoches prévues à cet effet dans le deuxième sous-ensemble, et par le logement de l'extrémité proximale des guides du deuxième sous-ensemble dans les arches prévues à cet effet dans le premier sous-ensemble.

On comprend que l'agencement du dispositif avec un guide central, deux guides latéraux et des guides intermédiaires pourrait être obtenu avec un nombre de guides différent de cinq tel qu'il a été décrit jusqu'alors, en modifiant le nombre de guides intermédiaires. On pourrait alors avoir sept ou neuf guides par exemple, dont la largeur pourrait être adaptée et diminuée. Dans le cas d'un dispositif à sept guides en série, le premier sous-ensemble comporterait le guide central et deux premiers guides intermédiaires, espacés les uns des autres par un intervalle permettant de loger un guide intermédiaire porté par le deuxième sous-ensemble, qui comporterait lui deux deuxièmes guides intermédiaires et les deux guides latéraux. On note que le nombre de guides optiques du dispositif est avantageusement impair pour conserver cette disposition dans laquelle un guide central est porté par le premier sous-ensemble, des guides intermédiaires sont agencés par paire de part et d'autre du guide central, et deux guides latéraux sont portés par un même sous-ensemble, à savoir le premier ou le deuxième selon le nombre de guides intermédiaires. On pourrait également prévoir que le dispositif ne comporte pas de guide optique intermédiaire, le nombre de guides optiques étant alors égal à trois, avec le guide central porté par le premier sous-ensemble et le les guides latéraux portés par le deuxième sous-ensemble.

On comprend que pour permettre le guidage des rayons lumineux à l'intérieur des guides, chaque sous-ensemble est réalisé dans un matériau permettant le guidage des rayons lumineux par réflexion interne depuis la face d'entrée vers la face de sortie. Un tel matériau pourra par exemple consister en du polycarbonate (PC), du polyméthacrylate de méthyle (PMMA), du silicone ou du verre. Chaque sous-ensemble est obtenu ici par une opération de moulage des guides optiques et des éléments structurels. La forme de ces sous-ensembles, et l'espacement prévu entre chaque guide optique voisin d'un même sous-ensemble, permet un démoulage facile.

Tel qu'illustré sur la figure 5, le dispositif créé par l'assemblage des deux sous-ensembles est ensuite fixé dans le module lumineux par un support de fixation 54 qui présente une forme de platine transversale comportant deux montants transversaux 56 et deux pattes de fixation latérales 58. Ces pattes de fixation sont aptes à être rapportées sur la structure 60 du module, et assurer la mise en place du dispositif à l'emplacement souhaité dans le module, et les montants transversaux permettent le support de chacune des extrémités, proximales et distales, des guides optiques. On comprend que les guides sont maintenus en place les uns par rapport aux autres par la présence des éléments structurels de chaque sous-ensemble du dispositif de l'invention et leur coopération, et que l'ensemble des guides est maintenu en place par rapport au module par la présence de ce support de fixation.

On a illustré sur la figure 4 un module lumineux dans lequel le dispositif lumineux que l'on vient de décrire est implanté. Le module est un module dit bifonction, c'est-à-dire un module dans lequel deux sous-modules 62, 64 sont agencés l'un contre l'autre pour réaliser de façon complémentaire une fonction de " feux de route " et une fonction de " feux de croisement ", par projection de faisceaux lumineux vers un dispositif optique de projection, de type lentille, disposé en sortie du module.

Le module s'inscrit dans un système d'éclairage qui comporte également des moyens de commande pour allumer, éteindre ou modifier la puissance lumineuse émise par chaque source de lumière de chaque module. Ces moyens de commande pourront être propre à chaque module ou consister en des moyens de commande uniques, dès lors que le pilotage de chaque source de lumière du système peut être simultané. Le système d'éclairage comporte en outre un module de détection sur la route d'un corps à ne pas éblouir. Ce module de détection consiste par exemple en une caméra tournée vers la scène de route s'étendant devant le véhicule, et en des moyens de traitement d'image associés, qui permettent l'élaboration d'un information de détection que le module de détection est apte à envoyer aux moyens de commande pour l'allumage, l'extinction ou la modification de la puissance lumineuse émise par chaque source de lumière en fonction de cette information de détection.

Il est particulièrement intéressant de proposer un système d'éclairage comprenant au moins deux modules d'éclairage tel qu'ils peuvent être décrits ici. Ces modules sont répartis de sorte qu'au moins un des modules est disposé dans un projecteur gauche du véhicule, et qu'au moins un des modules est disposé dans le projecteur droit correspondant. Dans chaque projecteur, il pourra être prévu une pluralité de modules d'éclairage. Les modules sont agencés les uns par rapport aux autres que ce soit au sein d'un même projecteur, ou entre les deux projecteurs, de manière à ce qu'au moins une partie de faisceau, par exemple un segment, réalisée par l'un des modules recouvre au moins une partie de faisceau, dans l'exemple un segment, réalisée par un autre des modules.

Dans au moins un module de chaque projecteur formé de deux sous-modules, le premier sous-module est agencé pour réaliser un premier faisceau à coupure, pour réaliser la fonction " feux de croisement ", et le deuxième sous-module est agencé pour réaliser un deuxième faisceau complémentaire du premier faisceau pour que ces deux faisceaux superposés réalisent ensemble la fonction " feux de route ". On entend par faisceau complémentaire un faisceau qui forme avec le faisceau réalisé par le premier sous-module un faisceau cohérent lorsque les deux sous-modules sont pilotés pour réaliser simultanément l'émission du faisceau lumineux qui leur est propre.

Le module comporte un cache 66 et une plaque de support 68 qui s'étendent sensiblement dans le plan médian du module, entre les deux sous-modules, le cache s'étendant notamment sur le trajet des rayons réfléchis par le premier sous-module 62 pour permettre de façon connue la coupure du premier faisceau tandis que la plaque de support porte les deux sous-modules et leur(s) source(s) de lumière respective(s) ainsi qu'un moyen de refroidissement 70 de l'ensemble. Le cache 66 présente un bord de coupure 72 qui présente un profil courbe, notamment en présentant un plan incliné 74, par exemple une forme de marche sensiblement au centre du bord de coupure. La zone centrale de réflexion est ainsi composée de deux parties distinctes en décalage verticale l'une par rapport à l'autre, un plan incliné, par exemple de 15° ou de 45°, les reliant pour former ladite marche.

Le faisceau complémentaire du deuxième sous-module est un faisceau sélectif permettant la réalisation d'une fonction de feux de route non éblouissant, avec un faisceau partagé en plusieurs portions, qui peuvent être allumées ou éteintes sélectivement selon les instructions de commande des sources lumineuses associées au deuxième sous-module. La fonction d'éclairage réalisée par chaque portion de faisceau peut être éteinte ou atténuée pour former une zone de non éblouissement d'un conducteur de véhicule détecté dans la scène de route en amont du véhicule, tout en permettant de conserver de bonnes conditions d'éclairage du reste de la scène de route.

Le deuxième sous-module 64 comporte notamment d'une part une pluralité de sources lumineuses activables sélectivement pour émettre, simultanément ou alternativement, des rayons lumineux, et d'autre part le dispositif lumineux décrit précédemment et composé d'une pluralité de guides optiques 6. Le dispositif et les diodes sont positionnés l'un par rapport aux autres, de manière à ce que chaque source soit apte à coopérer avec l'un des guides optiques pour former des images de ces sources au niveau du plan focal P du dispositif optique de projection, afin que ces images puissent être projetées par le dispositif de projection en sortie du module. Chaque portion de faisceau est obtenue par la coopération d'une source lumineuse et d'un guide optique associé et ces portions de faisceau prennent ici la forme de bandes droites rectilignes correspondant aux formes des faces de sortie des guides optiques du dispositif lumineux.

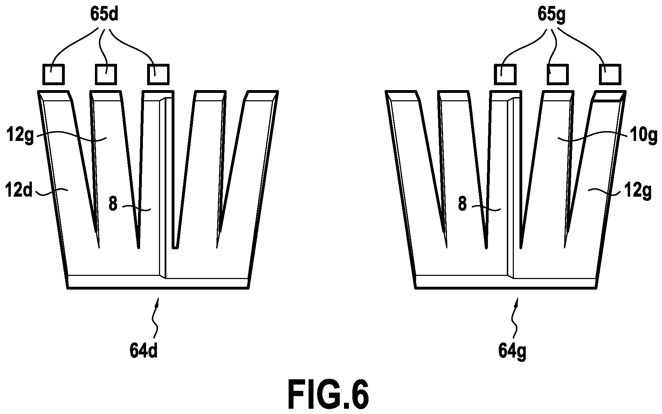

Sur la figure 6, on a illustré un mode d'implémentation préféré de l'invention dans lequel le dispositif comporte un nombre de guides optiques, ici cinq, supérieur au nombre de sources, ici trois. On obtient de la sorte un même ensemble standard, qui peut être utilisé à gauche ou à droite, en réalisant un nombre de segments inférieur au nombre de guides. Dans un sous-module gauche 64g associé à un module gauche, on dispose les trois sources 65g en regard du guide central 8, d'un guide intermédiaire gauche 10g et d'un guide latéral 12g, tandis que dans le sous-module droit 64d associé à un module droit, on dispose les trois sources 65d en regard du guide central 8, d'un guide intermédiaire droit 10d et d'un guide latéral 12d.

On comprend que, dans ce cas où le nombre de sources est inférieur au nombre de guides optiques et où l'emplacement des sources par rapport au dispositif diffère selon qu'on soit dans un sous-module gauche ou droit, il importe que les sources associées à un sous-module soient en regard des guides optiques dont la hauteur est supérieure aux autres et que les sources associées à l'autre sous-module soient en regard des guides optiques dont la hauteur est inférieure aux autres. Les sources sont disposées symétriquement, d'un sous-module à l'autre, par rapport au plan médian vertical du véhicule, et avantageusement vers l'extérieur du véhicule.

Dans une variante non illustrée, on pourra prévoir que les sources soient en nombre égal au nombre de guides optiques du dispositif, étant entendu que dans cette variante, il reste avantageux d'avoir une standardisation du dispositif dans les modules gauche et droit. Le nombre de segments est alors égal au nombre de guides optiques.

Le dispositif lumineux selon l'invention est agencé dans le deuxième sous-module. Les faces de sortie des guides optiques sont tournées vers la lentille et les faces d'entrée sont tournées vers un élément de structure sur lequel sont rapportées les sources lumineuses pour que celles-ci soient en regard de la face d'entrée du guide correspondant. Par ailleurs, la face de réflexion est tournée à l'opposé du cache tandis que la face avant est tournée vers le cache. Le dispositif est agencé dans le module de sorte que les guides optiques sont en contact avec le cache, uniquement au voisinage du plan focal de la lentille. C'est la face avant de chaque guide optique qui est au contact du cache, la ligne de contact entre chaque face avant et le cache étant dans le plan focal de la lentille.

Cet agencement et la forme sensiblement elliptique de la face de réflexion de chaque guide, qui tel que cela a été décrit précédemment permet que les rayons lumineux sortent du guide au sommet de la face de sortie, assurent qu'une partie de ces rayons atteint directement la lentille en partie supérieure tandis qu'une autre partie est réfléchie par une face inférieure du cache pour atteindre la lentille en partie inférieure.

Par ailleurs, les zones de recouvrement des images, formées par le fait que les extrémités distales des guides optiques soient plaquées l'une contre l'autre sur une portion déterminée, sont disposées en amont du plan focal de la lentille, ce qui permet de projeter un faisceau complémentaire dont les différentes portions sont lissées pour éviter un découpage vertical, dans le cas d'une segmentation du faisceau, trop net.

Les sources de lumière consistent chacune en une source à semi-conducteurs, et par exemple une diode électroluminescente fixée sur une carte de circuits imprimés, ou directement rapportée sur des éléments structurels du dispositif. Les sources lumineuses sont disposées en série transversale, avec un écart entre chaque source, qui peut être avantageusement compris entre 5 et 10mm et qui est sensiblement égal à l'écartement transversal entre deux faces d'entrée de guide optique successives du dispositif lumineux, de manière à ce que chaque guide soit bien disposé en regard d'une de ces sources lumineuses.

La série de guides optiques du dispositif est centrée transversalement dans le module, de manière à ce que le guide optique central 8 et le bord supérieur de son extrémité distale 18 coopère avec le plan incliné 74 du cache. De la sorte, les guides optiques intermédiaires 10 et latéraux 12 s'étendent transversalement de part et d'autre de ce plan incliné du cache. Etant entendu que le véhicule comporte deux projecteurs, un à gauche et un à droite, la superposition des deux faisceaux gauche et droit donne un faisceau route complémentaire complet dans lequel chaque segment du faisceau route peut être soit fortement éclairé par l'éclairage des deux segments correspondants des faisceaux gauche et droit, soit partiellement éclairé par l'éclairage du segment d'un des faisceaux ou par l'éclairage du segment de l'autre faisceau, soit éteint complètement. Par ailleurs, il est intéressant de noter que selon l'invention, un dispositif lumineux peut selon l'invention être implanté indifféremment dans le module d'un projecteur gauche ou dans le module d'un projecteur droit, ce qui simplifie le montage des projecteurs.

Dans l'exemple illustré, on dénombre cinq sources lumineuses pour autant de guides optiques, mais on comprendra qu'il convient selon l'invention que le nombre de sources lumineuses et donc de guides optiques soit au moins égal à trois et impair, étant rappelé que le nombre de sources peut être inférieur ou égal au nombre de guides optiques. On comprend qu'il est avantageux que le nombre de guides optiques soit impair pour que ceux-ci soient répartis symétriquement autour d'un guide central coopérant le plan incliné du cache, et que l'on puisse ainsi proposer un dispositif lumineux qui peut être réalisé et implanté de façon standard sur un module de projecteur gauche ou un module de projecteur droit. Et on comprend qu'il faut que le nombre soit strictement supérieur à un pour que les sources associées à chaque guide et activables sélectivement puissent générer la formation d'un faisceau complémentaire apte à réaliser une fonction de faisceau route non éblouissant dans laquelle l'un des segments du faisceau complémentaire peut être éteint ou atténué en cas de détection d'un véhicule dans la zone éclairée par ce segment.

La description qui précède explique clairement comment l'invention permet d'atteindre les objectifs qu'elle s'est fixés et notamment de proposer un dispositif lumineux qui facilite la conception et la fabrication d'une pluralité de guides optiques ainsi que leur mise en place dans un module en regard de sources lumineuses pour le guidage de rayons lumineux et la création d'un faisceau adaptatif.

Le dispositif est particulièrement facile à obtenir par moulage, du fait de la conception en deux sous-ensembles dans chacun desquels on prévoit des espaces importants laissés entre chaque guide optique et des angles obtus permettant d'éviter de créer des zones de fragilité. L'outillage et les moules correspondants sont ainsi plus faciles et moins onéreux à concevoir, et les pertes à la fabrication moins importantes.

La réalisation de deux sous-ensembles pour former l'ensemble des guides optiques, et le pré-montage facile du dispositif lumineux par la coopération des éléments structurels entre eux facilite l'utilisation pour chaque module d'un dispositif lumineux comportant des guides optiques disposés sensiblement symétriquement par rapport au plan vertical médian du module, de sorte que l'on peut disposer d'une même série de guides optiques pour un module d'un projecteur gauche et un module d'un projecteur droit. Ce choix permet de faciliter le montage et d'éviter les risques d'inversion, étant entendu qu'il peut être difficile d'identifier correctement les ensembles réalisés pour les modules gauche et droit.

Par ailleurs, la réalisation de deux sous-ensembles distincts de guides optiques permet de faciliter une standardisation de certains des guides optiques d'un véhicule automobile à l'autre, ou d'un projecteur à l'autre d'un même véhicule. On pourra réaliser le même deuxième sous-ensemble d'un projecteur à l'autre, et proposer un premier sous-ensemble, notamment par la forme du guide central et/ou des guides latéraux, qui peut s'adapter à la forme du module associé. Le module disposé dans le projecteur gauche pourra comporter un dispositif lumineux dans lequel le premier sous-ensemble comporte des guides optiques d'un premier type et le deuxième sous-ensemble comporte des guides optiques d'un deuxième type, et le module disposé dans le projecteur droit pourra dans le même temps comporter un dispositif lumineux dans lequel le premier sous-ensemble présente des guides optiques semblables ou distincts de ceux du premier sous-ensemble du projecteur gauche, et dans lequel le deuxième sous-ensemble présente des guides optiques d'un type là encore semblable ou distinct de ceux du deuxième sous-ensemble du premier dispositif lumineux.

Bien entendu, diverses modifications peuvent être apportées par l'homme du métier à la structure du dispositif lumineux qui vient d'être décrite à titre d'exemple non limitatif, notamment dans le nombre des guides optiques et dans la forme des éléments structurels des sous-ensembles, dès lors que le dispositif lumineux comporte selon l'invention une pluralité de guides optiques portés par une pluralité de sous-ensembles. En tout état de cause, l'invention ne saurait se limiter au mode de réalisation spécifiquement décrit dans ce document, et s'étend en particulier à tous moyens équivalents et à toute combinaison techniquement opérante de ces moyens.

## Revendications

1. Dispositif lumineux (1) comportant une série de guides optiques (6), chaque guide étant apte à permettre le guidage de rayons lumineux entre une face d'entrée (20) et une face de sortie (22),
et formé de deux sous-ensembles (2, 4) réalisés distinctement et comportant chacun une partie de ladite série de guides optiques et des éléments structurels (14) de tenue des guides en position, les deux sous-ensembles étant aptes à être assemblés pour former ledit dispositif par coopération desdits éléments structurels,
**caractérisé en ce que** le premier sous-ensemble comporte un premier élément structurel (30) apte à relier les extrémités proximales (16) des guides optiques et un deuxième élément structurel (32) distinct du premier élément structurel (30) et apte à relier les extrémités distales (18) des guides optiques.

2. Dispositif lumineux selon la revendication 1, **caractérisé en ce que** les guides optiques (6) sont disposés de sorte que l'extrémité distale respective (18), porteuse de la face de sortie, de deux guides voisins sont au contact l'une de l'autre et de sorte que l'extrémité proximale respective (16), porteuse de la face d'entrée (20), de ces deux guides voisins sont écartés transversalement l'une de l'autre.

3. Dispositif lumineux selon la revendication 2, **caractérisé en ce que** les extrémités distales (18) desdits guides optiques (6) voisins sont plaquées l'une contre l'autre sur une portion de recouvrement déterminée.

4. Dispositif lumineux selon l'une des revendications précédentes, **caractérisé en ce que** les guides optiques (6) sont répartis transversalement de part et d'autre d'un guide central (8).

5. Dispositif lumineux selon la revendication précédente, **caractérisé en ce que** l'extrémité distale (18) des guides optiques (6) disposés d'un côté du guide central (8) présente une hauteur moindre que celle de l'extrémité distale des guides disposés de l'autre côté du guide central.

6. Dispositif lumineux selon l'une des revendications précédentes, **caractérisé en ce qu'**il comporte cinq guides optiques (6) parmi lesquels un guide central (8), deux guides intermédiaires (10) disposés directement au voisinage du guide central de part et d'autre de celui-ci, et deux guides latéraux (12) disposés aux extrémités de la série, et **en ce que** le premier sous-ensemble (2) comporte le guide central (8) et les guides latéraux (12) tandis que le deuxième sous-ensemble (4) comporte les guides intermédiaires (10).

7. Dispositif lumineux selon l'une des revendications précédentes, **caractérisé en ce que** l'élément structurel du deuxième sous-ensemble (4) présente la forme d'une bande d'appui (42) positionné contre l'extrémité proximale des guides optiques (6), ladite bande comportant des encoches (46) pour positionner les guides optiques portés par le premier sous-ensemble (2) par rapport aux guides optiques solidaires de ladite bande.

8. Dispositif lumineux selon l'une des revendications précédentes, **caractérisé en ce que** le premier élément structurel (30) comporte des arches (36) reliant un à un les guides optiques du premier sous-ensemble (2) et aptes à venir en recouvrement de l'extrémité proximale (16) des guides optiques portés par le deuxième sous-ensemble (4).

9. Dispositif lumineux selon l'une des revendications précédentes, **caractérisé en ce que** le deuxième élément structurel consiste en une bande disposée transversalement aux faces de sortie, en aval desdites faces de sortie sur le trajet des rayons lumineux, en matière translucide ou transparente, contre laquelle les faces de sortie (22) des guides du deuxième sous-ensemble (4) viennent en appui.

10. Module lumineux pour un dispositif d'éclairage et/ou de signalisation de véhicule automobile, **caractérisé en ce qu'**il comporte des premiers moyens comportant un dispositif lumineux (1) selon l'une des revendications précédentes pour participer à la réalisation d'une pluralité de segments lumineux activables sélectivement.

11. Module lumineux selon la revendication précédente, ledit module comportant des deuxièmes moyens, agencés pour réaliser un premier faisceau à coupure dirigé vers un dispositif de projection agencé en sortie du module, les segments lumineux réalisés par les premiers moyens formant un deuxième faisceau dirigé vers le dispositif de projection et complémentaire au faisceau à coupure, lorsqu'ils sont activés simultanément.

12. Module lumineux selon l'une des revendications 10 à 11, **caractérisé en ce que** les premiers moyens comportent une pluralité de sources lumineuses, chaque source lumineuse étant associée à un guide optique d'un groupe de guides optiques du dispositif lumineux, le nombre de guides optiques dudit groupe étant inférieur ou égal au nombre de guides optiques du dispositif lumineux.

13. Module lumineux selon la revendication précédente, **caractérisé en ce que** le nombre de guides optiques dudit groupe de guides est strictement inférieur au nombre de guides optiques du dispositif lumineux.

14. Système d'éclairage comprenant au moins un module lumineux selon l'une des revendications 10 à 13 et des moyens de commande pour allumer, éteindre ou modifier la puissance lumineuse émise par les premiers moyens et les deuxièmes moyens du module lumineux.

## Patentansprüche

1. Leuchtvorrichtung (1), umfassend eine Reihe von optischen Wellenleitern (6), wobei jeder Wellenleiter geeignet ist, die Leitung von Lichtstrahlen zwischen einer Eingangsfläche (20) und einer Ausgangsfläche (22) zu ermöglichen,
und von zwei Untereinheiten (2, 4) gebildet ist, die getrennt hergestellt sind und jeweils einen Teil der Reihe von optischen Wellenleitern und Strukturelemente (14) zum Halten der Wellenleiter in Position umfassen, wobei die zwei Untereinheiten geeignet sind, zusammengefügt zu werden, um die Vorrichtung durch Zusammenwirken der Strukturelemente zu bilden,
**dadurch gekennzeichnet, dass** die erste Untereinheit ein erstes Strukturelement (30), das geeignet ist, die proximalen Enden (16) der optischen Wellenleiter zu verbinden, und ein zweites Strukturelement (32) umfasst, das von dem ersten Strukturelement (30) getrennt und geeignet ist, die distalen Enden (18) der optischen Wellenleiter zu verbinden.

2. Leuchtvorrichtung nach Anspruch 1, **dadurch gekennzeichnet**, das die optischen Wellenleiter (6) derart angeordnet sind, dass das jeweilige distale, die Ausgangsfläche tragende Ende (18) von zwei benachbarten Wellenleitern miteinander in Kontakt sind, so dass das jeweilige proximale, die Eingangsfläche (20) tragende Ende (16) dieser zwei benachbarten Wellenleiter quer zueinander beabstandet sind.

3. Leuchtvorrichtung nach Anspruch 2, **dadurch gekennzeichnet, dass** die distalen Enden (18) der benachbarten optischen Wellenleiter (6) auf einem bestimmten Überdeckungsabschnitt aneinander gedrückt sind.

4. Leuchtvorrichtung nach einem der vorhergehenden Ansprüche, **dadurch gekennzeichnet, dass** die optischen Wellenleiter (6) quer beiderseits eines zentralen Wellenleiters (8) verteilt sind.

5. Leuchtvorrichtung nach dem vorhergehenden Anspruch, **dadurch gekennzeichnet, dass** das distale Ende (18) der optischen Wellenleiter (6), die auf einer Seite des zentralen Wellenleiters (8) angeordnet sind, eine geringere Höhe als jene des distalen Endes der Wellenleiter, die auf der anderen Seite des zentralen Wellenleiters angeordnet sind, aufweist.

6. Leuchtvorrichtung nach einem der vorhergehenden Ansprüche, **dadurch gekennzeichnet, dass** sie fünf optische Wellenleiter (6) umfasst, darunter einen zentralen Wellenleiter (8), zwei Zwischenwellenleiter (10), die direkt in der Nähe des zentralen Wellenleiters beiderseits desselben angeordnet sind, und zwei seitliche Wellenleiter (12), die an den Enden der Reihe angeordnet sind, und dass die erste Untereinheit (2) den zentralen Wellenleiter (8) und die seitlichen Wellenleiter (12) umfasst, während die zweite Untereinheit (4) die Zwischenwellenleiter (10) umfasst.

7. Leuchtvorrichtung nach einem der vorhergehenden Ansprüche, **dadurch gekennzeichnet, dass** das Strukturelement der zweiten Untereinheit (4) die Form eines Trägerbandes (42) aufweist, das gegen das proximale Ende der optischen Wellenleiter (6) positioniert ist, wobei das Band Kerben (46) umfasst, um die optischen Wellenleiter, die von der ersten Untereinheit (2) getragen werden, in Bezug zu den mit dem Band verbundenen optischen Wellenleitern zu positionieren.

8. Leuchtvorrichtung nach einem der vorhergehenden Ansprüche, **dadurch gekennzeichnet, dass** das erste Strukturelement (30) Bögen (36) umfasst, die die optischen Wellenleiter der ersten Untereinheit (2) eins und eins verbinden und geeignet sind, zur Abdeckung des proximalen Endes (16) der optischen Wellenleiter, die von der zweiten Untereinheit (4) getragen werden, zu gelangen.

9. Leuchtvorrichtung nach einem der vorhergehenden Ansprüche, **dadurch gekennzeichnet, dass** das zweite Strukturelement in einem Band, das quer zu den Ausgangsflächen stromabwärts zu den Ausgangsflächen auf der Bahn der Lichtstrahlen angeordnet ist, aus durchscheinendem oder durchsichtigem Material besteht, an dem die Ausgangsflächen (22) der Wellenleiter der zweiten Untereinheit (4) zur Anlage gelangen.

10. Leuchtmodul für eine Leucht- und/oder Anzeigevorrichtung eines Kraftfahrzeugs, **dadurch gekennzeichnet, dass** es erste Mittel, umfassend eine Leuchtvorrichtung (1) nach einem der vorhergehenden Ansprüche, umfasst, um an der Verwirklichung einer Vielzahl von selektiv aktivierbaren Leuchtsegmenten beteiligt zu sein.

11. Leuchtmodul nach dem vorhergehenden Anspruch, wobei das Modul zweite Mittel umfasst, die angeordnet sind, um einen ersten Lichtstrahl mit Abgrenzung, der zu einer am Ausgang des Moduls angeordneten Projektionsvorrichtung gerichtet ist, herzustellen, wobei die durch die ersten Mittel hergestellten Leuchtsegmente einen zweiten Lichtstrahl bilden, der zu der Projektionsvorrichtung gerichtet und zum Lichtstrahl mit Abgrenzung komplementär ist, wenn sie gleichzeitig aktiviert werden.

12. Leuchtmodul nach einem der Ansprüche 10 bis 11, **dadurch gekennzeichnet, dass** die ersten Mittel eine Vielzahl von Lichtquellen umfassen, wobei jede Lichtquelle einem optischen Wellenleiter einer Gruppe von optischen Wellenleitern der Leuchtvorrichtung zugeordnet ist, wobei die Anzahl von optischen Wellenleitern der Gruppe kleiner oder gleich der Anzahl von optischen Wellenleitern der Leuchtvorrichtung ist.

13. Leuchtmodul nach dem vorhergehenden Anspruch, **dadurch gekennzeichnet, dass** die Anzahl von optischen Wellenleitern der Gruppe von Wellenleitern unbedingt kleiner als die Anzahl von optischen Wellenleitern der Leuchtvorrichtung ist.

14. Beleuchtungssystem, umfassend mindestens ein Leuchtmodul nach einem der Ansprüche 10 bis 13 und Steuermittel, um die von den ersten Mitteln und den zweiten Mitteln des Leuchtmoduls ausgesandte Lichtleistung einzuschalten, auszuschalten oder zu verändern.

## Claims

1. Lighting device (1) including a series of optical waveguides (6), each waveguide being adapted to enable light rays to be guided between an entry face (20) and an exit face (22), and formed of two subassemblies (2, 4) produced separately and each including a portion of said series of optical waveguides and structural elements (14) for retaining the waveguides in position, the two subassemblies being adapted to be assembled to form said device by cooperation of said structural elements, **characterized in that** the first subassembly includes a first structural element (30) adapted to connect the proximal ends (16) of the optical waveguides and a second structural element (32) distinct from the first structural element (30) and adapted to connect the distal ends (18) of the optical waveguides.

2. Lighting device according to Claim 1, **characterized in that** the optical waveguides (6) are disposed so that the respective distal ends (18) carrying the exit face of two adjacent guides are in contact with each other and so that the respective proximal ends (16) carrying the entry face (20) of these two adjacent waveguides are transversely spaced from each other.

3. Lighting device according to Claim 2, **characterized in that** the distal ends (18) of said adjacent optical waveguides (6) are pressed against one another over a particular overlap portion.

4. Lighting device according to any one of the preceding claims, **characterized in that** the optical waveguides (6) are transversely distributed on either side of a central waveguide (8).

5. Lighting device according to the preceding claim, **characterized in that** the distal end (18) of the optical waveguides (6) disposed on one side of the central waveguide (8) have a height less than that of the distal end of the waveguides disposed on the other side of the central guide.

6. Lighting device according to any one of the preceding claims, **characterized in that** it includes five optical waveguides (6) comprising a central waveguide (8), two intermediate waveguides (10) disposed in the direct vicinity of the central waveguide on either side thereof, and two lateral waveguides (12) disposed at the ends of the series, and **in that** the first subassembly (2) includes the central waveguide (8) and the lateral waveguides (12) and the second subassembly (4) includes the intermediate waveguides (10).

7. Lighting device according to any one of the preceding claims, **characterized in that** the structural element of the second subassembly (4) is in the shape of a bearing strip (42) positioned against the proximal end of the optical waveguides (6), said strip including notches (46) for positioning the optical waveguides carried by the first subassembly (2) relative to the optical waveguides attached to said strip.

8. Lighting device according to any one of the preceding claims, **characterized in that** the first structural element (30) includes arches (36) connecting the optical waveguides of the first subassembly (2) one-by-one and adapted to come to overlap the proximal end (16) of the optical waveguides carried by the second subassembly (4).

9. Lighting device according to any one of the preceding claims, **characterized in that** the second structural element consists in a strip disposed transversely to the exit faces, on the downstream side of said exit faces on the path of the light rays, made of translucent or transparent material, against which the exit faces (22) of the waveguides of the second subassembly (4) come to bear.

10. Lighting module for a motor vehicle lighting and/or signaling device, **characterized in that** it includes first means including a lighting device (1) according to any one of the preceding claims to participate in the production of a plurality of light segments that can be selectively activated.

11. Lighting module according to the preceding claim, said module including second means adapted to produce a first cut-off beam directed toward a projection device arranged at the exit of the module, the light segments produced by the first means forming a second beam directed toward the projection device and complementary to the cut-off beam when they are activated simultaneously.

12. Lighting module according to either one of Claims 10 and 11, **characterized in that** the first means include a plurality of light sources, each light source being associated with an optical waveguide of a group of optical waveguides of the lighting device, the number of optical waveguides of said group being less than or equal to the number of optical waveguides of the lighting device.

13. Lighting module according to the preceding claim, **characterized in that** the number of optical waveguides of said group of waveguides is strictly less than the number of optical waveguides of the lighting device.

14. Lighting system comprising at least one lighting module according to any one of Claims 10 to 13 and control means for turning on, turning off or modifying the luminous power emitted by the first means and the second means of the lighting module.
